# FASCICULE DE BREVET EUROPEEN

(11) **EP 2 537 746 B1**
(45) Date de publication et mention de la délivrance du brevet: **26.11.2014**
(21) Numéro de dépôt: 12172342.3
(22) Date de dépôt: 18.06.2012
(51) Int. Cl.: B64C 11/00, F01D 5/02, F16F 15/32

(54) **Système propulsif à hélices contrarotatives non carénées et son procédé d'équilibrage**
Antriebssystem mit gegenläufigem offenen Rotor und Ausgleichsverfahren dafür
Propulsion system with contrarotating open rotors and its balancing method

(30) Priorité: 22.06.2011 FR 1155506
(43) Date de publication de la demande: 26.12.2012
(73) Titulaire: Airbus Opérations SAS, 31060 Toulouse (FR)
(72) Inventeur: Quiroz-Hernandez, Esteban, 31100 Toulouse (FR)
(74) Mandataire: Gevers France

(56) Documents cités:
- WO-A2-2010/010293
- WO-A2-2010/086338
- FR-A1- 2 908 827
- FR-A1- 2 939 470
- US-A1- 2006 083 619

## Description

La présente invention concerne un procédé d'équilibrage pour un système propulsif à hélices contrarotatives coaxiales non carénées.

Un procédé d'équilibrage pour un système propulsif à hélices contrarotatives est connu de WO 2010/010293.

On sait que, dans un tel système propulsif, généralement appelé CROR (pour « Contra-Rotating Open Rotor » en langue anglo-saxonne), chaque hélice comporte un moyeu entouré concentriquement par une enveloppe de moyeu, chaque enveloppe de moyeu faisant saillie de part et d'autre du plan de l'hélice correspondante. Dans ce type de système propulsif, le centre de gravité de chaque hélice est susceptible d'être écarté de son axe de rotation, ce qui résulte, lors de sa rotation, en un phénomène de balourd radial. Or, un tel balourd est susceptible d'engendrer des vibrations mécaniques qui peuvent être transmises à un équipement - en particulier la nacelle d'un aéronef accueillant des passagers - auquel le système propulsif est fixé, ce qui peut être désagréable pour ceux-ci.

Afin d'éliminer (ou à tout le moins réduire) cet éventuel balourd radial, il est déjà connu de rapporter un ensemble de masselottes à des emplacements prévus sur le système propulsif, dans le plan de chaque hélice, orthogonal à l'axe de rotation de celle-ci. Le centre de gravité de chaque hélice peut alors être repositionné vis-à-vis de son axe de rotation en disposant, auxdits emplacements, des masselottes dont les masses sont choisies de façon adéquate eu égard à leurs emplacements, ce qui peut par exemple être effectué lors de phases de test du système propulsif, soit au sol, soit en conditions de vol.

Toutefois, un tel équilibrage du système propulsif s'avère souvent insuffisant. En effet, lorsque le système propulsif est en vol, les pales des hélices sont soumises à un ensemble de forces aérodynamiques, parmi lesquelles des forces de poussée et de résistance aérodynamiques axiales. Il s'ensuit l'apparition de forces et de moments additionnels auxquels lesdites hélices sont soumises, ce qui déséquilibre d'autant plus le système propulsif.

L'objet de la présente invention est de remédier à cet inconvénient.

A cette fin, selon l'invention, le procédé d'équilibrage d'un système propulsif à au moins deux hélices contrarotatives coaxiales non carénées, chacune desdites hélices comportant un moyeu entouré concentriquement par une enveloppe de moyeu et chacune desdites enveloppes de moyeu faisant saillie de part et d'autre du plan de l'hélice correspondante, procédé d'équilibrage selon lequel, pour éliminer, ou à tout le moins réduire, un éventuel balourd dudit système propulsif, on rapporte des masselottes à des emplacements prévus sur celui-ci, est remarquable en ce que lesdits emplacements se trouvent sur lesdites enveloppes de moyeu, au voisinage des extrémités de celles-ci éloignées des plans desdites hélices.

Ainsi, grâce à la présente invention, les masselottes étant disposées, dans le système propulsif, de façon éloignée, à la fois radialement et axialement, du centre de gravité de chaque hélice, il en résulte la génération de forces et de moments aptes à corriger les déséquilibres radial et axial de façon précise.

En outre, grâce à la présente invention, l'équilibrage manuel du système propulsif peut être réalisé facilement par un opérateur, puisque les emplacements pour les masselottes sont prévus directement sur les enveloppes de moyeu, qui sont des parties externes du système, donc très accessibles.

On notera par ailleurs que la présente invention, par le positionnement des masselottes aux extrémités de chaque enveloppe de moyeu, met à profit de façon optimale l'espace disponible au niveau de chaque hélice.

Afin de rendre l'équilibrage à la fois précis et simple, pour au moins l'une des enveloppes de moyeu, les emplacements des masselottes peuvent se trouver dans deux plans orthogonaux à l'axe des hélices et situés de part et d'autre du plan de l'hélice correspondante, aux extrémités de ladite enveloppe de moyeu.

Selon un premier mode de réalisation de l'invention, au moins l'une des masselottes est au moins partiellement logée dans une cavité disposée à l'un desdits emplacements.

Lorsqu'au moins certaines des masselottes sont au moins partiellement logées dans des cavités disposées à certains des emplacements, lesdites cavités peuvent être réparties de façon circonférentielle sur l'enveloppe de moyeu correspondante.

Afin que l'équilibrage du système propulsif n'influe pas sur les performances aérodynamiques dudit système, au moins l'une des cavités peut être configurée de manière que la masselotte correspondante, une fois logée dans ladite cavité, ne soit pas en saillie sur l'enveloppe de moyeu correspondante.

Parmi les cavités définies ci-dessus, au moins l'une d'elles peut comporter :
- un logement fileté dans lequel peut être insérée la masselotte correspondante, ladite masselotte présentant alors au moins partiellement la forme d'une vis, ou
- un orifice dans lequel peut être insérée la partie inférieure de la masselotte correspondante, l'extrémité supérieure de ladite masselotte étant pourvue d'au moins un orifice de fixation par lequel celle-ci peut être fixée à l'enveloppe de moyeu correspondante au moyen d'au moins un organe de fixation, tel qu'un rivet.

Selon un deuxième mode de réalisation de l'invention, certaines des masselottes peuvent former un anneau à masse circonférentiellement non-uniforme inséré dans un logement coaxial à l'enveloppe de moyeu correspondant et disposé à l'un des emplacements, ledit logement étant délimité, d'une part, par celle-ci, et, d'autre part, par un épaulement ménagé sous ladite enveloppe de moyeu.

Dans ce cas, afin de positionner correctement l'anneau à masse circonférentiellement non-uniforme et de le maintenir par ailleurs dans cette position, celui-ci et l'enveloppe de moyeu correspondante peuvent être chacun pourvus d'au moins un orifice de verrouillage, lesdits orifices de verrouillage étant aptes à être mis en regard l'un avec l'autre en vue de l'introduction d'un organe de verrouillage.

Afin de positionner facilement l'anneau à masse circonférentiellement non-uniforme, celui-ci peut comporter une graduation angulaire visible au travers de ladite enveloppe de moyeu.

L'invention concerne également un système propulsif à au moins deux hélices contrarotatives coaxiales non carénées, chacune desdites hélices comportant un moyeu entouré concentriquement par une enveloppe de moyeu et chacune desdites enveloppes de moyeu faisant saillie de part et d'autre du plan de l'hélice correspondante, ledit système propulsif comprenant des masselottes rapportées à des emplacements prévus sur celui-ci, pour éliminer, ou à tout le moins réduire, un éventuel balourd dudit système propulsif, ledit système propulsif étant remarquable en ce que lesdits emplacements se trouvent sur lesdites enveloppes de moyeu, au voisinage des extrémités de celles-ci éloignées des plans desdites hélices.
Les figures du dessin annexé feront bien comprendre comment l'invention peut être réalisée. Sur ces figures, des références identiques désignent des éléments techniques semblables.
La figure 1 est une vue schématique et partielle en coupe d'un système propulsif à hélices contrarotatives coaxiales non carénées, muni d'un ensemble de masselottes conformément à la présente invention.
La figure 2 est une vue en perspective schématique de l'une des hélices du système propulsif de la figure 1, les masselottes étant des vis logées dans des logements filetés ménagés dans l'enveloppe de moyeu de ladite hélice.
La figure 3 est une vue en coupe par un plan passant par les logements filetés, les pales des hélices n'étant pas représentées.
Les figures 4A et 4B sont des vues de différentes masselottes sous forme de vis, aptes à être insérées dans des logements filetés préalablement ménagés dans l'enveloppe de moyeu de l'hélice des figures 2 et 3.
La figure 5 est une vue en perspective schématique de l'une des hélices du système propulsif de la figure 1, les masselottes étant des masses logées et fixées dans des orifices ménagés dans l'enveloppe de moyeu de ladite hélice.
La figure 6 est une vue en plan partielle de l'enveloppe de moyeu de l'hélice de la figure 5.
La figure 7 est une vue en coupe par un plan passant par une masselotte des figures 5 et 6.
La figure 8 est une vue en perspective schématique de l'une des hélices du système propulsif de la figure 1, les masselottes formant des anneaux à masse circonférentiellement non-uniforme.
La figure 9 est une vue en perspective schématique de l'un des anneaux de la figure 8.
La figure 10 est une vue en coupe de l'enveloppe de moyeu de l'hélice de la figure 8, au niveau des anneaux à masse circonférentiellement non-uniforme.
La figure 11 est une vue en plan partielle de l'enveloppe de moyeu de la figure 8, au niveau des anneaux à masse circonférentiellement non-uniforme.

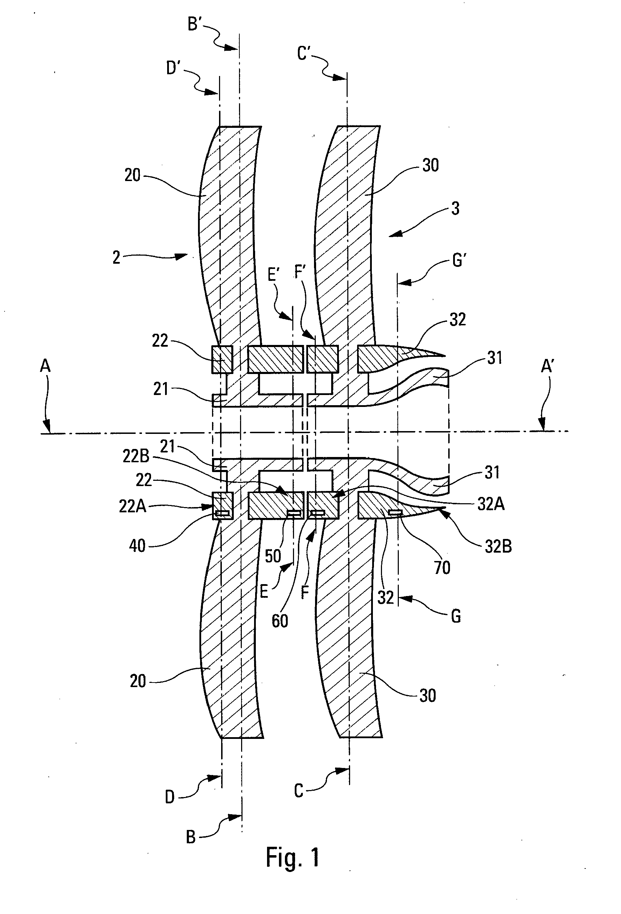

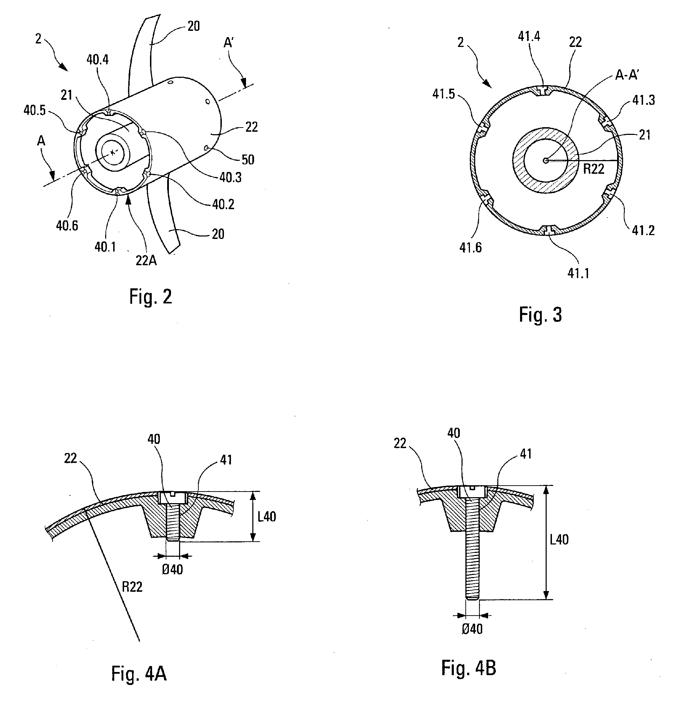

Le système propulsif 1, représenté sur la figure 1, comprend deux hélices non carénées, respectivement une hélice avant 2 et une hélice arrière 3, agencées pour tourner autour d'un axe commun A-A', dans des sens de rotation opposés. L'hélice avant 2 comporte une pluralité de pales 20 (dont deux seulement sont représentées sur les figure 2, 5 et 8), disposées dans un plan B-B' (orthogonal à l'axe A-A') qui forme le plan de l'hélice 2, ainsi qu'un moyeu 21 entouré concentriquement par une enveloppe de moyeu 22, celle-ci faisant saillie de part et d'autre dudit plan B-B'. De même, l'hélice arrière 3 comporte une pluralité de pales 30, disposées dans un plan C-C' (orthogonal à l'axe A-A') qui forme le plan de l'hélice 3, ainsi qu'un moyeu 31 entouré concentriquement par une enveloppe de moyeu 32, celle-ci faisant saillie de part et d'autre dudit plan C-C'.

Afin d'éliminer - ou à tout le moins de réduire - un éventuel balourd dû à un décalage du centre de gravité de chaque hélice par rapport à l'axe de rotation A-A', on dispose sur les enveloppes de moyeu 22 et 32, conformément à la présente invention, un ensemble de masselottes respectivement 40, 50 et 60, 70, dont les masses et positions respectives sont déterminées de manière à repositionner de façon correcte lesdits centres de gravité.

Plus précisément, les masselottes 40 et 50 sont respectivement rapportées à des emplacements prévus sur l'enveloppe de moyeu 22, dans deux plans D-D' et E-E', tous deux orthogonaux à l'axe A-A' (donc parallèles au plan B-B' de l'hélice 2) et situés de part et d'autre du plan B-B', au voisinage des extrémités avant 22A et arrière 22B de ladite enveloppe de moyeu 22. De façon semblable, les masselottes 60 et 70 sont respectivement rapportées à des emplacements prévus sur l'enveloppe de moyeu 32, dans deux plans F-F' et G-G', tous deux orthogonaux à l'axe A-A' (donc parallèles au plan C-C' de l'hélice 3) et situés de part et d'autre du plan C-C', au voisinage des extrémités avant 32A et arrière 32B de ladite enveloppe de moyeu 32.

La disposition des masselottes 40, 50, 60 et 70 dans quatre plans distincts (deux plans pour chaque hélice), telle que définie ci-dessus, offre ainsi à un opérateur la possibilité d'équilibrer le système propulsif, non seulement de façon aisée à partir des parties les plus accessibles dudit système (les enveloppes de moyeu), mais encore de façon précise. On remarquera, de par leur disposition, que les emplacements pour les masselottes peuvent être aménagés directement lors de la fabrication de l'enveloppe de moyeu.

Par la suite, seuls seront décrits les emplacements et masselottes situés dans le plan D-D' de l'hélice avant 2, mais il va de soi que ce qui suit peut s'appliquer de façon semblable aux emplacements et masselottes disposés dans les plans E-E', F-F' et G-G'.

Selon un premier mode de réalisation de l'invention, représenté sur les figures 2, 3, 4A et 4B, les masselottes 40 se présentent sous la forme de vis 40.1, 40.2, 40.3, 40.4, 40.5 et 40.6 agencées de façon équidistante sur une circonférence de l'enveloppe de moyeu 22 (i.e. séparées angulairement de 60°), situé au voisinage de son extrémité avant 22A, dans le plan B-B'. Aux fins d'un équilibrage précis, la disposition d'au moins six masselottes équidistantes (comme représentées sur les figures 2 et 3) - préférentiellement huit séparés de 45° - peut être adéquate.

Les emplacements pour les masselottes 40.1 à 40.6 sont représentés sur la figure 4. Au niveau de ces emplacements sont disposés des cavités 41.1, 41.2, 41.3, 41.4, 41.5 et 41.6, de façon régulière sur la circonférence de l'enveloppe de moyeu 22, à une distance de l'axe A-A' sensiblement égale au rayon R22 de ladite enveloppe de moyeu 22.

L'une de ces cavités, désignée par la référence 41 et qui correspond à l'une quelconque des cavités 41.1 à 41.6, est représentée plus en détails sur la figure 4A. Celle-ci comprend, dans sa partie inférieure, un logement fileté (préférentiellement de forme circulaire) dans laquelle peut être logée la vis 40 (qui désigne indifféremment l'une des vis 40.1 à 40.6), et, dans sa partie supérieure, un logement dans lequel la tête de ladite vis 40 peut être encastrée, de manière que cette dernière ne soit pas en saillie sur l'enveloppe de moyeu 22.

On notera que la masse de chaque masselotte 40 est notamment fonction de son diamètre 040, de sa longueur L40 et de son matériau constitutif. Ainsi un effet de contrepoids équivalent peut être produit par la masselotte 40 si, à diamètre 040 égal (par exemple 10 mm), celle-ci est faite en un matériau à haute densité (tel que le tungstène, de densité égale à 19500 kg/m3) et présente une courte longueur L40 (par exemple 35 mm), comme cela est représenté sur la figure 4A, ou si elle est faite en un matériau à faible densité (par exemple l'acier) et présente une longueur L40 élevée, comme cela est représenté sur la figure 4B. A ce titre, un matériau à haute densité sera préféré, dans la mesure où il permet d'utiliser des vis (et donc des cavités) de moindre longueur, ce qui permet d'économiser de l'espace dans l'enveloppe de moyeu.

Les cavités 41, quant à elles, peuvent être formées en des matériaux à faible densité (ce qui permet de réduire la masse supplémentaire induite par le dispositif d'équilibrage), mais préférentiellement résistants à haute température. Par ailleurs, les masselottes 40 et les cavités 41 engendrant des contraintes mécaniques locales sur l'enveloppe de moyeu 22, il peut être adjoint à ladite enveloppe de moyeu un anneau (non représenté) - ou à tout le moins une portion d'anneau - de renfort, au moins au niveau desdites cavités 41. En outre, un mécanisme de verrouillage peut être joint à au moins l'une des masselottes 40, une fois celle-ci insérée dans la cavité correspondante 41, de manière à éviter tout détachement de ladite masselotte 40 lors du fonctionnement du système propulsif 1.

Ainsi, l'équilibrage du système propulsif 1 peut être opéré en insérant de façon adéquate les masselottes 40, présentant au moins partiellement la forme de vis et dont les masses, diamètres et longueurs sont correctement choisis, dans les cavités 41. S'il existe des cavités dans lesquelles aucune masselotte ne doit être insérée pour équilibrer le système propulsif, il peut être recouru à des vis faites en des matériaux légers ou bien à des vis creuses, afin d'occuper ces cavités.

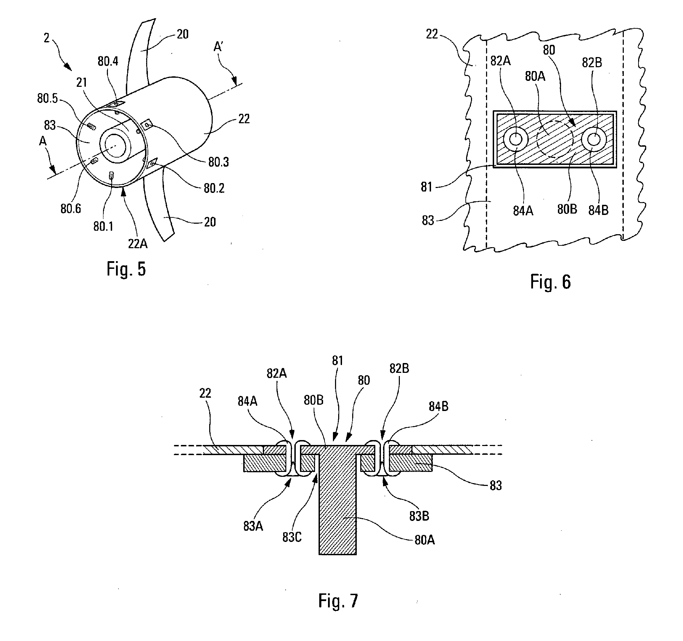

Selon un deuxième mode de réalisation de l'invention, représenté sur les figures 5, 6, et 7, les masselottes 40 sous forme de vis 40.1 à 40.6 sont remplacées par des masselottes 80 sous forme de masses 80.1, 80.2, 80.3, 80.4, 80.5 et 80.6, disposées de façon semblable aux masselottes 40 des figures 2 et 3 et destinées à être insérées dans des cavités 81 (figure 6 et 7), qui présentent la forme d'orifices ménagés dans l'enveloppe de moyeu 22.

Plus précisément, chacune de ces masselottes, désignée par la référence 80 (correspondant indifféremment aux masselottes 80.1 à 80.6), comporte, d'une part, une partie inférieure 80A constituant la majeure partie de la masse de la masselotte, et, d'autre part, une extrémité supérieure 80B de dimension supérieure à celle de la partie inférieure 80A et apte à être encastrée dans l'orifice 81 de l'enveloppe de moyeu 22. Cette extrémité supérieure 80B est pourvue de deux orifices de fixation 82A et 82B. Un anneau 83, de masse circonférentiellement uniforme et de largeur supérieure à la dimension de l'orifice 81, est par ailleurs disposé de manière à être plaqué contre la paroi interne de l'enveloppe de moyeu 22, au niveau desdits orifices 81. Cet anneau 83 est par ailleurs pourvu d'une pluralité d'orifices, parmi lesquels des orifices 83A et 83B, destinés à être mis en regard des orifices de fixation 82A et 82B de l'extrémité supérieure 80B de chaque masselotte 80, ainsi que des orifices 80C, destinés à être traversés par la partie inférieure 80A de chaque masselotte 80 (mais pas par leur extrémité supérieure 80B).

Ainsi, par l'intermédiaire de l'anneau 83, chaque masselotte 80 peut être fixée à l'enveloppe de moyeu 22, en soudant des organes de fixation 84A et 84B respectivement à l'intérieur des orifices 82A et 83A et à l'intérieur des orifices 82B et 83B, lorsque ladite masselotte 80 est correctement insérée dans les orifices 81 et 83C. A cet effet, les organes de fixation 84A et 84B peuvent être des rivets.

On notera que l'utilisation de masselottes 80 sous forme de masses jointes à l'enveloppe de moyeu 22 par des organes de fixation permet, par rapport à des masselottes 40 sous forme de vis telles que représentées sur les figures 2, 3, 4A et 4B, de renforcer la fixation desdites masselottes dans leurs cavités respectives et donc d'éviter tout risque de détachement desdites masselottes. Toutefois, dans ce cas, lorsqu'une masselotte doit être remplacée par un autre à des fins de rééquilibrage, il importe de retirer les organes de fixation et, dans le cas de rivets, d'en souder de nouveaux, ce qui nécessite des outils spécifiques.

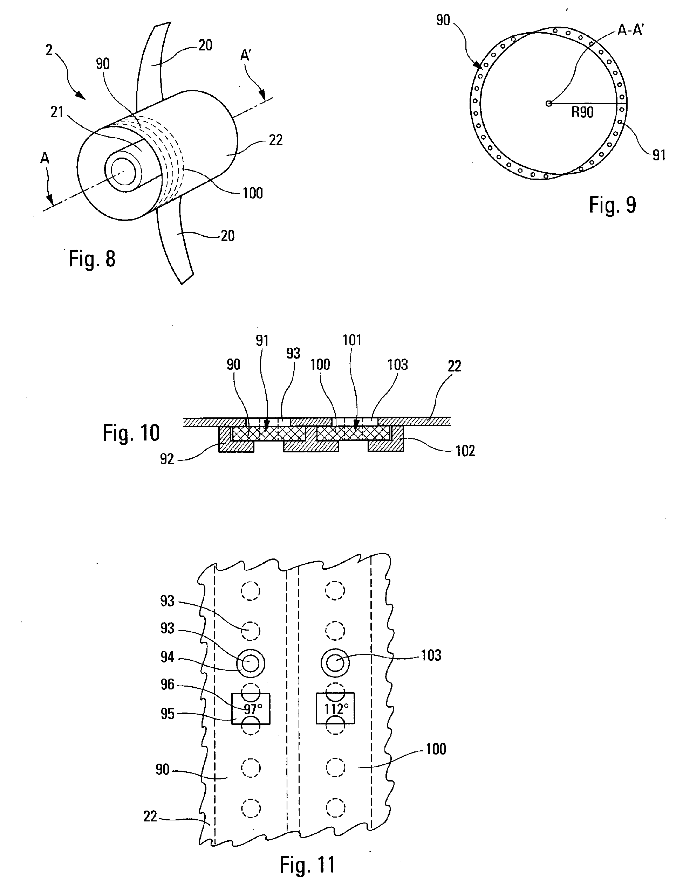

Selon un troisième mode de réalisation de l'invention, les masselottes 40 et 80 sont remplacées par deux anneaux à masse circonférentiellement non-uniforme 90 et 100 (i.e. dont la masse n'est pas uniforme sur leur circonférence), comme représenté sur les figures 8, 9, 10 et 11. Chacun de ces anneaux - par exemple l'anneau 90 (figure 9) - présente un rayon R90 sensiblement inférieur à celui R22 de l'enveloppe de moyeu 22 et est pourvu d'une pluralité d'orifices de verrouillage 91. En outre, chaque anneau 90 (respectivement 100) est disposé dans un logement 91 (101) coaxial à l'enveloppe de moyeu 22 et situé sous la paroi interne de ladite enveloppe de moyeu 22, ce logement 91 (101) étant délimité de façon circonférentielle, d'une part, par ladite enveloppe de moyeu 22, et, d'autre part, par un épaulement 92 (102) ménagé sous ladite enveloppe de moyeu 22.

Ainsi, chaque anneau 90 (respectivement 100) peut être déplacé dans son logement 91 (101) par simple glissement le long de l'épaulement 92 (102), qui joue ainsi un rôle de guidage, pour que la répartition de la masse supplémentaire (circonférentiellement non-uniforme) induite par l'anneau 90 (100) permette de rééquilibrer de façon adéquate le système propulsif 1. Pour faire glisser l'anneau 90 (100), un opérateur peut utiliser tout outil adéquat à sa disposition. Par la suite, lorsque l'anneau 90 (100) est positionné de façon souhaitée dans son logement, sa position peut être verrouillée en mettant en regard un orifice de verrouillage 91 (101) prévu sur ledit anneau 90 (100) et un orifice de verrouillage 93 (103) prévu sur l'enveloppe de moyeu 22, puis en les couplant l'un à l'autre au moyen d'un organe de verrouillage adéquat (par exemple vis, rivet, etc.).

On comprendra ici que le positionnement angulaire de chaque anneau (et donc l'équilibrage du système propulsif 1) est d'autant plus précis que le nombre d'orifices de verrouillage 91 prévus sur l'anneau 90 est élevé.

Par ailleurs, comme cela est représenté sur la figure 11 en ce qui concerne l'anneau 90 (mais cela s'applique également à l'anneau 100), l'enveloppe de moyeu 22 est pourvue d'un orifice additionnel 95 à travers lequel une graduation angulaire 96, aménagée sur ledit anneau 90, peut être lue, afin que l'opérateur qui manipule ledit anneau 90 puisse aisément déterminer la position angulaire de celui-ci et en déduire le déplacement à lui conférer. A cette fin, la position angulaire 96 peut être directement inscrite sur l'anneau 90.

## Revendications

1. Procédé d'équilibrage d'un système propulsif (1) à au moins deux hélices contrarotatives coaxiales non carénées (2, 3), chacune desdites hélices (2, 3) comportant un moyeu (21, 31) entouré concentriquement par une enveloppe de moyeu (22, 32) et chacune desdites enveloppes de moyeu (22, 32) faisant saillie de part et d'autre du plan de l'hélice correspondante (B-B', C-C'), procédé d'équilibrage selon lequel, pour éliminer, ou à tout le moins réduire, un éventuel balourd dudit système propulsif (1), on rapporte des masselottes (40, 40.1-40.6, 50, 60, 70, 80, 80.1-80.6, 90, 100) à des emplacements prévus sur celui-ci, **caractérisé en ce que** lesdits emplacements se trouvent sur lesdites enveloppes de moyeu (22, 32), au voisinage des extrémités (22A, 22B, 32A, 32B) de celles-ci éloignées des plans desdites hélices (B-B', C-C').

2. Procédé selon la revendication 1,
**caractérisé en ce que**, pour au moins l'une desdites enveloppes de moyeu (22), les emplacements desdites masselottes se trouvent dans deux plans (D-D', E-E', F-F', G-G') orthogonaux à l'axe des hélices (A-A') et situés de part et d'autre du plan de l'hélice correspondante (B-B', C-C'), aux extrémités (22A) de ladite enveloppe de moyeu (22).

3. Procédé selon la revendication 1 ou 2,
**caractérisé en ce qu**'au moins l'une desdites masselottes (40, 40.1-40.6, 80, 80.1-80.6) est au moins partiellement logée dans une cavité (41, 41.1-41.6, 81) disposée à l'un desdits emplacements.

4. Procédé selon la revendication 3,
**caractérisé en ce qu**'au moins certaines desdites masselottes (40, 40.1-40.6, 80, 80.1-80.6) étant au moins partiellement logées dans des cavités (41, 41.1-41.6, 81) disposées à certains desdits emplacements, lesdites cavités (41, 41.1-41.6, 81) sont réparties de façon circonférentielle sur l'enveloppe de moyeu correspondante (22).

5. Procédé selon la revendication 3 ou 4,
**caractérisé en ce qu'**au moins l'une desdites cavités (41, 41.1-41.6, 81) est configurée de manière que la masselotte correspondante (40, 40.1-40.6, 80, 80.1-80.6), une fois logée dans ladite cavité, ne soit pas en saillie sur l'enveloppe de moyeu correspondante (22).

6. Procédé selon l'une des revendications 3 à 5,
**caractérisé en ce qu'**au moins l'une desdites cavités (41, 41.1-41.6) comporte un logement fileté dans lequel peut être insérée la masselotte correspondante (40, 40.1-40.6), ladite masselotte présentant au moins partiellement la forme d'une vis.

7. Procédé selon l'une des revendications 3 à 5,
**caractérisé en ce qu**'au moins l'une desdites cavités (81) comporte un orifice dans lequel peut être insérée la partie inférieure (80A) de la masselotte correspondante (80), l'extrémité supérieure (80B) de ladite masselotte étant pourvue d'au moins un orifice de fixation (82A, 82B) par lequel celle-ci peut être fixée à l'enveloppe de moyeu correspondante (22) au moyen d'au moins un organe de fixation (83A, 83B).

8. Procédé selon la revendication 1 ou 2,
**caractérisé en ce que** certaines desdites masselottes (90, 100) forment un anneau à masse circonférentiellement non-uniforme (90, 100) coaxial à l'enveloppe de moyeu correspondant et inséré dans un logement (91, 101) disposé à l'un desdits emplacements, ledit logement étant délimité, d'une part, par celle-ci (22), et, d'autre part, par un épaulement (92, 102) ménagé sous ladite enveloppe de moyeu (22).

9. Procédé selon la revendication 8,
**caractérisé en ce que** ledit anneau à masse circonférentiellement non-uniforme (90) et l'enveloppe de moyeu correspondante (22) sont chacun pourvus d'au moins un orifice de verrouillage (91, 93), lesdits orifices de verrouillage (91, 93) étant aptes à être mis en regard l'un avec l'autre en vue de l'introduction d'un organe de verrouillage.

10. Procédé selon la revendication 8 ou 9,
**caractérisé en ce que** l'enveloppe de moyeu correspondante (22) comporte une graduation angulaire (96) visible au travers de ladite enveloppe de moyeu (22).

11. Système propulsif (1) à au moins deux hélices contrarotatives coaxiales non carénées (2, 3), chacune desdites hélices (2, 3) comportant un moyeu (21, 31) entouré concentriquement par une enveloppe de moyeu (22, 32) et chacune desdites enveloppes de moyeu (22, 32) faisant saillie de part et d'autre du plan de l'hélice correspondant (B-B', C-C'), ledit système propulsif (1) comprenant des masselottes (40, 40.1-40.6, 50, 60, 70, 80, 80.1-80.6, 90, 100) rapportées à des emplacements prévus sur celui-ci, pour éliminer, ou à tout le moins réduire, un éventuel balourd dudit système propulsif (1),
**caractérisé en ce que** lesdits emplacements se trouvent sur lesdites enveloppes de moyeu (22, 32), au voisinage des extrémités (22A, 22B, 32A, 32B) de celles-ci éloignées des plans desdites hélices (B-B', C-C').

## Patentansprüche

1. Ausgleichsverfahren für ein Antriebssystem (1) mit mindestens zwei nicht stromlinienförmigen, koaxialen, gegenläufigen Schrauben (2, 3), wobei jede der Schrauben (2, 3) eine Nabe (21, 31) aufweist, die konzentrisch von einer Nabenhülle (22, 32) umgeben ist, und wobei jede der Nabenhüllen (22, 32) beiderseits der Ebene der entsprechenden Schraube (B-B', C-C') vorspringt, wobei bei dem Ausgleichsverfahren zur Beseitigung oder zumindest zur Verringerung einer möglichen Unwucht des Antriebssystems (1) Fliehgewichte (40, 40.1-40.6, 50, 60, 70, 80, 80.1-80.6, 90, 100) an auf diesem vorgesehenen Stellen angebracht sind, **dadurch gekennzeichnet, dass** die Stellen sich an den Nabenhüllen (22, 32) in der Nähe von deren Enden (22A, 22B, 32A, 32B), die von den Ebenen der Schrauben (B-B', C-C') entfernt sind, befinden.

2. Verfahren nach Anspruch 1,
**dadurch gekennzeichnet, dass** bei mindestens der einen der Nabenhüllen (22) die Stellen der Fliehgewichte sich in zwei Ebenen (D-D', E-E', F-F', G-G'), die orthogonal zu der Achse der Schrauben (A-A') sind und sich beiderseits der Ebene der entsprechenden Schraube (B-B', C-C') befinden, an den Enden (22A) der Nabenhülle (22) befinden.

3. Verfahren nach Anspruch 1 oder 2,
**dadurch gekennzeichnet, dass** mindestens eines der Fliehgewichte (40, 40.1-40.6, 80, 80.1-80.6) mindestens teilweise in einem Hohlraum (41, 41.1-41.6, 81) aufgenommen ist, der an einer der Stellen vorgesehen ist.

4. Verfahren nach Anspruch 3,
**dadurch gekennzeichnet, dass** mindestens bestimmte der Fliehgewichte (40, 40.1-40.6, 80, 80.1-80.6) mindestens teilweise in Hohlräumen (41, 41.1-41.6, 81) aufgenommen sind, die an bestimmten der Stellen vorgesehen sind, wobei die Hohlräume (41, 41.1-41.6, 81) auf der entsprechenden Nabenhülle (22) umfänglich verteilt sind.

5. Verfahren nach Anspruch 3 oder 4,
**dadurch gekennzeichnet, dass** mindestens einer der Hohlräume (41, 41.1-41.6, 81) derart ausgebildet ist, dass das entsprechende Fliehgewicht (40, 40.1-40.6, 80, 80.1-80.6), sobald es in dem Hohlraum aufgenommen ist, nicht von der entsprechenden Nabenhülle (22) vorspringt.

6. Verfahren nach einem der Ansprüche 3 bis 5,
**dadurch gekennzeichnet, dass** mindestens einer der Hohlräume (41, 41.1-41.6, 81) einen Gewindesitz aufweist, in den das entsprechende Fliehgewicht (40, 40.1-40.6) eingeführt werden kann, wobei das Fliehgewicht mindestens teilweise die Form einer Schraube aufweist.

7. Verfahren nach einem der Ansprüche 3 bis 5,
**dadurch gekennzeichnet, dass** mindestens einer der Hohlräume (81) eine Öffnung aufweist, in die der untere Teil (80A) des entsprechenden Fliehgewichts (80) eingeführt werden kann, wobei das obere Ende (80B) des Fliehgewichts mit mindestens einer Befestigungsöffnung (82A, 82B) versehen ist, durch die es an der entsprechenden Nabenhülle (22) mit Hilfe mindestens eines Befestigungsorgans (83A, 83B) befestigt werden kann.

8. Verfahren nach Anspruch 1 oder 2,
**dadurch gekennzeichnet, dass** bestimmte der Fliehgewichte (90, 100) einen Ring mit umfänglich ungleichförmiger Masse (90, 100) bilden, der koaxial zu der entsprechenden Nabenhülle ist und in einen Sitz (91, 101), der an einer der Stellen angeordnet ist, eingeführt ist, wobei der Sitz einerseits durch diese letzte (22) und andererseits durch einen Absatz (92, 102) begrenzt ist, der unter der Nabenhülle (22) eingerichtet ist.

9. Verfahren nach Anspruch 8,
**dadurch gekennzeichnet, dass** der Ring mit umfänglich ungleichförmiger Masse (90) und die entsprechende Nabenhülle (22) jeweils mit mindestens einer Verriegelungsöffnung (91, 93) versehen sind, wobei die Verriegelungsöffnungen (91, 93) angepasst sind, um zum Einführen eines Verriegelungsorgans einander gegenüber zu liegen.

10. Verfahren nach Anspruch 8 oder 9,
**dadurch gekennzeichnet, dass** die entsprechende Nabenhülle (22) eine Winkelskala (96) aufweist, die durch die Nabenhülle (22) hindurch zu sehen ist.

11. Antriebssystem (1) mit mindestens zwei nicht stromlinienförmigen, koaxialen, gegenläufigen Schrauben (2, 3), wobei jede der Schrauben (2, 3) eine Nabe (21, 31) aufweist, die konzentrisch von einer Nabenhülle (22, 32) umgeben ist, und wobei jede der Nabenhüllen (22, 32) beiderseits der Ebene der entsprechenden Schraube (B-B', C-C') vorspringt, wobei das Antriebssystem (1) Fliehgewichte (40, 40.1-40.6, 50, 60, 70, 80, 80.1-80.6, 90, 100) umfasst, die an auf diesem vorgesehenen Stellen angebracht sind, um eine mögliche Unwucht des Antriebssystems (1) zu beseitigen oder zumindest zu verringern,
**dadurch gekennzeichnet, dass** die Stellen sich an den Nabenhüllen (22, 32) in der Nähe von deren Enden (22A, 22B, 32A, 32B), die von den Ebenen der Schrauben (B-B', C-C') entfernt sind, befinden.

## Claims

1. A balancing method for a propulsive system (1) with at least two coaxial non streamlined contra-rotating propellers (2,3), each of said propellers (2,3) comprising a hub (21,31) concentrically surrounded by a hub envelope (22,32) and each of said hub envelopes (22, 32) projecting on either part of the plan of the corresponding propeller (B-B',C-C'), said balancing method according to which, to eliminate, or at least to reduce a possible unbalance of said propulsive system (1), counterweights (40, 40.1-40.6, 50, 60, 70, 80, 80.1-80.6, 90, 100) are arranged on locations being provided on the latter,
**characterized in that** said locations are located on said hub envelopes (22,32), close to the ends (22A, 22B, 32A, 32B) of the latter being distant from the plans of said propellers (B-B', C-C').

2. The method according to claim 1,
**characterized in that**, for at least one of said hub envelopes (22), the locations of the counterweights are situated in two plans (D-D', E-E', F-F', G-G') being orthogonal to the propeller axis (A-A') and arranged on either part of the plan of the corresponding propeller (B-B',C-C'), on the ends (22A) of said hub envelope (22).

3. The method according to claim 1 or 2,
**characterized in that** at least one of said counterweights (40,40.1-40.6,80,80.1-80.6) is at least partially embedded in a cavity (41,41.1-41.6,81) arranged on one of said locations.

4. The method according to claim 3,
**characterized in that** at least some of said counterweights (40,40.1-40.6,80,80.1-80.6) are at least partially embedded in cavities (41,41.1-41.6,81)arranged on some of said locations, said cavities (41,41.1-41.6,81) being circumferentially distributed on the corresponding hub envelope (22).

5. The method according to claim 3 or 4,
**characterized in that** at least one of said cavities (41,41.1-41.6,81) is configured in such a way that the corresponding counterweight (40,40.1-40.6,80, 80.1-80.6), once embedded within said cavity, does not project on the corresponding hub envelope (22).

6. The method according to one of claims 3 to 5,
**characterized in that** at least one of said cavities (41,41.1-41.6) comprises a threaded housing in which the corresponding counterweight (40,40.1-40.6) can be inserted, said counterweight presenting then at least partially the shape of a screw.

7. The method according to one of claims 3 to 5,
**characterized in that** at least one of said cavities (81) comprises an orifice in which the lower part (80A) of the corresponding counterweight (80) can be inserted, the upper end (80B) of said counterweight being provided with at least a fastening orifice (82A,82B) through which the latter can be fastened to the corresponding hub envelope (22) by means of at least one fastening member (83A,83B).

8. The method according to claim 1 or 2,
**characterized in that** some of said counterweights (90, 100)form a circumferentially non uniform(90,100) mass ring (90,100) coaxial to the corresponding hub envelope and inserted within a housing (91,101) arranged on one of said locations, said housing being bound, on the one side, by the latter (22), and, on the other side, by a shoulder (92,102) arranged under said hub envelope (22).

9. The method according to claim 8,
**characterized in that** said circumferentially non uniform (90) mass ring and the corresponding hub envelope (22) are each provided with at least one lock orifice (91,93), said lock orifices (91,93) being able to be put opposite each other with a view to introduce a lock member.

10. The method according to claim 8 or 9,
**characterized in that** the corresponding hub envelope (22) comprises an angular graduation (96) being visible thru said hub envelope (22).

11. A propulsive system (1) with at least two coaxial non streamlined contra-rotating propellers (2,3), each of said propellers (2,3) comprising a hub (21,31) concentrically surrounded by an hub envelope (22,32) and each of said hub envelopes (22,32) projecting on either part of the plan of the corresponding propeller (B-B',C-C'), said propulsive system (1) comprising counterweights (40, 40. 1-40. 6, 50, 60, 70, 80, 80. 1-80. 6, 90, 100) arranged on locations provided on the latter so as to eliminate, or at least to reduce, a possible unbalance of said propulsive system (1),
**characterized in that** said locations are located on said hub envelopes (22,32), close to the ends (22A, 22B, 32A, 32B) of the latter being distant from the plans of said propellers (B-B',C-C').
